# EUROPEAN PATENT SPECIFICATION

(11) **EP 0 672 352 B1**
(45) Date of publication and mention of the grant of the patent: **25.09.2002**
(21) Application number: 95200641.9
(22) Date of filing: 16.03.1995
(51) Int. Cl.: A23J 3/34, A23L 1/305, A23J 3/18

(54) **Processes for the preparation of glutamine-rich peptides and food preparations made therewith**
Verfahren zur Herstellung von Glutaminreiche Peptiden und Nahrungsmittelzusammensetzungen die diese Peptide enthalten
Procédés pour la préparation de peptides riches en glutamine et préparations alimentaires contenants ces peptides

(30) Priority: 16.03.1994 NL 9400418
(43) Date of publication of application: 20.09.1995
(73) Proprietor: CAMPINA MELKUNIE B.V., NL-5301 LB Zaltbommel (NL)
(72) Inventor: Zuurendonk, Peter Frederik, NL-5467 BB Veghel (NL); Van de Veerdonk, Franciscus Lambertus Maria, NL-5248 JS Rosmalen (NL); Steijns, Johannes Maria Jozef Margaretha, NL-5427 VN Boekel (NL)
(74) Representative: Smulders, Theodorus A.H.J., Ir.

(56) References cited:
- EP-A- 0 540 462
- GB-A- 2 162 849
- DATABASE WPI Week 9233 Derwent Publications Ltd., London, GB; AN 92-274006 & JP-A-04 187 643 (SHOWA SANGYO CO) , 6 July 1992
- DATABASE WPI Week 9013 Derwent Publications Ltd., London, GB; AN 90-096513 & JP-A-02 049 579 (KYOWA HAKKO KOGYO KK) , 19 February 1990 & PATENT ABSTRACTS OF JAPAN vol. 014 no. 215 (C-0716) ,8 May 1990 & JP-A-02 049579 (KYOWA HAKKO KOGYO CO LTD) 19 February 1990,
- DATABASE WPI Week 9246 Derwent Publications Ltd., London, GB; AN 92-378213 & JP-A-04 279 597 (GIFU YOHO KK) , 5 October 1992
- DATABASE WPI Week 9405 Derwent Publications Ltd., London, GB; AN 94-039690 & JP-A-05 344 863 (MEIJI MILK PROD CO LTD) , 27 December 1993

## Description

This invention relates to processes for the preparation of glutamine-rich peptides. In addition, the invention relates to peptide mixtures having a high glutamine content, in particular for use in food preparations. The invention further relates to therapeutic foods and beverages that can be prepared therewith, containing a high percentage of heat- and acid-stable peptides having a high glutamine content, obtained from natural raw materials. In particular, the invention relates to preparations based on peptides having a high glutamine content, which are suitable for use in clear drinks and foods, more particularly sports foods, hospital foods, restorative foods and the like.

As is known, the human body itself is not capable of producing all amino acids needed to build proteins. In this connection a distinction is made between essential and nonessential amino acids. Under normal physiologic conditions, the amino acid glutamine falls into the category of nonessential amino acids. The functions which glutamine performs in the human body include its role in the transport of nitrogen between the organs (transport of ammonia in nontoxic form), as a substrate for the release of ammonia in the kidneys (contribution to the acid-base balance in the blood), as an intermediate substrate for the formation of building blocks for the synthesis of RNA and DNA (nitrogen supplier) and as fuel for the intestines and cells of the immune system.

Muscular tissue contains large amounts of glutamine (about 50% of the total pool of free amino acids present in muscular tissue). During stress glutamine leaks from the muscle cells. Probably, the body thus tries to maintain the glutamine values in the plasma at the proper level. During severe illness, patients are subject to net protein loss, principally in the muscles. In the case of progressive disease, the plasma glutamine levels fall as well, with the result that tissues that consume relatively much glutamine will fail to function or will function less well.

In this sense, glutamine is a conditionally essential amino acid (see, for instance, Lacey and Willmore, Nutrition Reviews 48, 1990, 297-309). For sportsmen, a relationship has been suggested between lowered glutamine levels in muscles and plasma on the one hand and immune suppression on the other (see, for instance, Parry-Billings et al. Int.J. Sports Med. 11, 1990, 122-128).

Increased glutamine intake can remove these deficiencies. The beneficial effect of the amino acid glutamine in persons subject to a decrease in muscle and plasma glutamine and nett protein loss is known. It was found that an additional supplement of glutamine to parenteral (intravenous) nutrition has a recovery-enhancing effect (Ziegler et al., Ann. Intern. Med. 116 (1992) 821-828).

Technologically speaking, however, the free amino acid glutamine has a major limitation. In solution, certainly at higher temperatures, the molecule is not stable. It is partly converted to pyroglutamate (to which neurotoxic properties are ascribed) and ammonia. This makes it unpractical, not to say impossible, to sterilize and further process such solutions.

WO 89/03688 describes a food supplement made up of amino acids suitable for clinical foods. The problem of thermal instability is obviated by sterile filtration and freeze-drying. For use, the freeze-dried powder can be dissolved. The options for use are thus limited considerably, *inter alia* because such solutions have a very limited storage life.

U.S. Patent 5,039,704 also describes the beneficial effect of glutamine in the treatment of catabolic dysfunctions. It is indicated that glutamine or a glutamine analog are suitable for this purpose; here, too, the solutions are subjected to sterile filtration and thereafter they can be stored for not more than 24 hours at 4°C.

WO 92/09277 utilizes, in lieu thereof, a sterilization by means of radioactive radiation. Such radiation, if permitted by law at all, will not be experienced as positive for the benefit of, or on the part of, a target group which is vulnerable in terms of health.

In addition, such preparations have the further disadvantage that when the food contains many free amino acids, the osmolarity of the product is increased, which reduces the effective use and the application possibilities in the human body. When glutamine is present in the food in peptide form (as amino acid in a peptide chain), the above problems are basically solved. Glutamine which is bound in peptides, and hence is protected, is resistant to the conventional pasteurization or sterilization temperatures in food. Moreover, such peptides hardly contribute to the osmolarity of the food.

The idea of administering glutamine protected in a peptide has previously been suggested a number of times. In WO 92/09277, in addition to the free L-glutamine, synthetic glutamine-containing peptides are used.

EP 0 087 750 describes the use of synthetic diene tripeptides which are suitable for oral and intravenous uses.

EP 0 540 462 also describes the use of glutamine in clinical and sports foods. Although it is indicated that protein hydrolysates that contain the desired peptides could also be used, synthetic peptides in the form of N-acetylated compounds are preferred there.

Tanabe, J. of Food Biochemistry 16 (1993) 235-248 describes the use of a protein hydrolysate having a high content of glutamine-bound peptides. Here gluten is treated with two different enzymes. In the second treatment, the terminal amino acids of the glutamine-containing peptides are cut off and removed. This results in a peptide preparation comprising nearly 50% glutamine bound in peptide. In the process, relatively much terminal glutamine is obtained. In view of the reactivity of glutamine, however, the presence of the glutamine as amino-terminal amino acid must be avoided.

It has now been found that by enzymatic hydrolysis of natural proteins using exclusively an endopeptidase, a heat-and acid-stable peptide mixture could be obtained which has a high content of glutamine and is suitable for special foods for special target groups. By this process peptide preparations having a high glutamine content can be prepared, which have a very low content, preferably less than 2%, of peptides having a terminal glutamine. Also, by this process very few free amino acids are generated which would increase the osmolarity of the product and hence reduce its applicability.

Accordingly the invention is directed to the process of claim 1 and to the product of claim 4.

As is known, the acceptation of products on a natural basis is higher than that of products which are prepared synthetically, certainly in groups such as the target group for the products according to the invention. Moreover, the preparation of synthetic peptides is generally far from simple. Furthermore, in the preparation of synthetic peptides many compounds are used whose presence in food is undesired, to say the least.

In principle, virtually all animal and vegetable proteins can be hydrolyzed enzymatically. By the choice of the starting protein and of the type and amount of enzyme, but even more by an appropriate choice of the reaction conditions, a large number of different products can be obtained.

For the preparation of a peptide preparation having a high content of glutamine bound in peptides, wheat protein is used. Wheat protein contains about 30% glutamine. Protein hydrolysis of wheat protein gives a higher yield and efficiency of desired peptides.

Many proteolytic enzymes are suitable. In order to obtain the maximum yield of the desired glutamine-rich peptides, endopeptidases such as pepsin, trypsin, chymotrypsin, papain, bromelain, and microbial proteinases (both neutral and alkaline) are used. Exopeptidases produce too many undesirable free amino acids. The optimum hydrolysis conditions, such as protein concentration, pH, enzyme concentration, time, and buffering/pH conditioning, are dictated by the choice of the enzyme.

It appeared that it was possible to obtain a sufficient degree of hydrolysis within a period of 2 to 3 hours. As soon as the desired degree of hydrolysis has been attained, the residual enzyme must be inactivated. Conventional in this connection is a heating to a temperature above about 90°C. The glutamine peptides obtained can resist this heating step. At the same time, the crude hydrolysate is pasteurized. The hydrolysis preparation thus obtained possesses the desired properties with regard to peptide-bound glutamine. Further purification of this crude preparation increases its applicability.

In the first place, residual fat and any larger unreacted proteins can now be removed. In this connection, by known techniques such as centrifugation, microfiltration or filtration after dosage of filter adjuvants (celite, norite, diatomaceous earth), a clear solution of peptide-bound glutamine can be obtained. Clear preparations are better applicable, in particular in enteral foods and medicinal foods. As a consequence, the peptide preparations according to the invention are applicable in all foods in which the peptide preparations of the prior art were used. The conventional additives, other nutrients, as well as flavoring, coloring and aromatic substances are certainly compatible with the preparations according to the invention.

The molecular weight distribution of the peptides is determined by the choice of the enzyme hydrolysis. A narrower distribution can be achieved by ultrafiltration techniques whereby particularly the high-molecular peptides are separated. In particular, an average molecular weight of between 1000 and 2000 is preferred, but peptides having a molar weight of up to 10,000 Daltons definitely fall under the scope of protection of the invention. Ultrafiltration can, for instance, be carried out with membranes having a cut-off of between 10,000 and 30,000 Daltons.

The molecular weights of the peptides according to the invention are maintained substantially between 200 and 10,000.

If any further purification, for instance desalting, is desirable, the conventional techniques for that purpose (e.g. electrodialysis, diafiltration, ion exchange) can be used. If desired, the product can be dried by conventional drying techniques, which considerably prolongs the storage life of the preparation. The peptide preparation obtained can be characterized by the following physicochemical parameters.
a. Content of glutamine bound in peptides.
   These contents can be determined in accordance with "Methods in Enzymology" Vol. 11 p.63 (1967) Academic Press New York. A peptide solution is heated in 2 M HCl at 110°C for 3 hours, whereby ammonia is split off from the amide. After neutralization with KOH, ammonia is measured enzymatically with glutamate-dehydrogenase, utilizing the Boehringer test kit no. 1112732. Also, prior to the hydrochloric acid treatment, the free ammonia was measured. The peptide-bound glutamine is calculated by the formula 146/17 x % bound ammonia. This method is not specific for glutamine. In this manner, ammonia is also liberated from asparagine. However, the amount of asparagine in wheat proteins is minor.
b. Free glutamine. This can be measured after derivatization with phenyl isothiocyanate and separation of the individual amino acids by means of reversed phase amino acid chromatography.
c. The total amount of free amino acids can be measured after derivatization of the amino acids as described under b, followed by summation of the values for the individual amino acids.
d. The chain length, or the molecular weight distribution, can be determined by means of an analysis using gel permeation chromatography over a Superose-12 column (Pharmacia) with 6M urea in 0.1 m Tris buffer (pH 8.5) as mobile phase. Detection takes place by measurement of the light absorption at 220 nm.
e. The clarity of the glutamine preparation in solution can be measured by known transmission measurements at 600 nm. A solution is considered to be clear if the transmission in a 1 cm cuvette is at least 98%.
f. The acid stability is determined after a pasteurization for 10 min. at 80°C at pH 4. The absence of destabilization characteristics such as turbidity or sedimentation is an indication of acid stability.
g. The stability upon heating can be assessed after a pasteurization treatment (for instance, for 10 min. at 80°C) or sterilization treatment (for 30 sec. at 120°C). The amount of peptide-bound glutamine before and after the heat treatment is measured as described under a. The preparation is considered heat-stable if not more than a relative proportion of 5% of the glutamines has been lost by the heat treatment.

The invention will now be further elucidated in and by a number of non-limitative examples.

### Example 1

300 g soluble wheat protein (supplier Roquettes Frères) was suspended and dissolved in 2.5 liters deionized water and the pH was adjusted to 7.5 with 7.5 M NaOH. After heating to 55°C the hydrolysis process was initiated by adding 6 g of the enzyme papain (Marcor, USA). During the three-hour incubation time, the pH was maintained at the above-mentioned value by adding 7.5 M NaOH. Upon completion of the incubation, the pH was lowered to 4.0 by adding 18% hydrochloric acid. By heating to 95°C for 20 min, the enzyme was inactivated. In order to partly remove the undissolved material, the thus treated hydrolysate, after cooling to room temperature, was centrifuged at 3,000 x g for 20 min. The supernatant liquid was subjected to ultrafiltration through a polysulfon membrane (type PTTK 0005, Millipore, Bedford, MA, USA). The permeate of this UF step was freeze-dried.

Upon analysis of the obtained product, the following values were obtained:

| | |
|---|---|
| Yield | 43% |
| Peptide-bound glutamine | 25 g/100 g |
| Free glutamine | 0.7 g/100 g |
| Free amino acids | 3.5 g/100 g |
| Molecular weight distribution | 98% between 200 and 10,000 |
| Clarity | clear in a 5% solution |
| Acid stability | no turbidity |
| Stability of glutamine upon heating | 0.8 g/100 g reduction of glutamine |

### Example 2

A sports beverage based on the peptide-bound glutamine preparation obtained according to Example 1 was prepared as follows.

To 460 ml demineralized water were added 20 g fructose and 2.0 g glutamine preparation according to Example 1. Then 0.63 g lemon flavor (IFF 1S∼13482) and 0.13 g sweetlime flavor (IFF 75980279). The pH was adjusted to pH 3.8 by means of citric acid. The beverage was then bottled in brown-glass 100 ml bottles and pasteurized at 80°C for 10 min.

A tasty, clear glutamine-enriched beverage was obtained. Upon test storage for 6 weeks at room temperature, no change in taste and appearance could be observed.

### Example 3

A jelly based on the peptide-bound glutamine preparation was prepared as follows.

To 800 ml boiling water were added 100 g saccharose, 45 g fructose and 40 g peptide-bound glutamine preparation. As flavor, 0.2 g of a strawberry flavor (IFF 15.02.2506) was added. The jelly structure was obtained by adding 1.3 g gelatin. Finally, 0.12 g color (Cocheneal red, E 120) was added. The whole was stirred until all of the ingredients were dissolved. After cooling in a refrigerator to a temperature below 10°C, a fine, clear and tasty jelly was obtained.

### Example 4

A glutamine-enriched acid tomato soup was obtained as follows.

To 180 ml boiling water were added 20 g instant tomato soup powder (Knorr) and 2 g of the glutamine preparation from Example 1. The whole was mixed for one minute, whereupon a tasty soup was obtained.

## Claims

1. A process for preparing a food preparation comprising a glutamine rich peptide preparation from wheat protein, a conventional solvent and optionally other nutrients, said peptide preparation comprising at least 20% glutamine, having a molecular weight of between 200 and 10,000, with at most 10% of the peptides having a terminal glutamine, said process comprising treating glutamine-rich wheat protein to a treatment with a proteolytic enzyme, which enzyme is exclusively an endopeptidase.

2. A process according to claim 1, wherein the peptide preparation is purified by means of filtration, microfiltration or ultrafiltration to form a clear preparation.

3. A process according to claim 1 or 2, wherein the peptide preparation is subjected to a pasteurization.

4. A food preparation obtainable by any of the preceding claims, wherein the peptide preparation comprises at least 20% glutamine and has a molecular weight of between about 200 and about 10,000, with at most 10% of the peptides having a terminal glutamine.

5. A food preparation according to claim 4, wherein, in the peptide preparation, at most 2% of the peptides has a terminal glutamine.

6. A food preparation according to claim 5, wherein the peptide preparation comprises at least 25% glutamine.

7. A food preparation according to claim 5 or 6, wherein the peptide preparation comprises not more than 5% free amino acids.

8. A food preparation according to claims 5-7, wherein the peptide preparation comprises not more than 2% free glutamine.

9. A food preparation according to claim 8, wherein the peptide preparation comprises not more than 1% free glutamine.

10. A food preparation according to claims 4-9, which further contains flavoring, coloring and/or aromatic substances.

11. A food preparation according to claim 10, which further contains conventional food additives.

## Patentansprüche

1. Verfahren zur Herstellung einer Nahrungsmittelzusammensetzung mit einer glutaminreichen Peptidzusammensetzung aus Weizenprotein, einem konventionellen Lösungsmittel und gegebenenfalls anderen Nährstoffen, wobei die Peptidzusammensetzung wenigstens 20% Glutamin mit einem Molekulargewicht zwischen 200 und 10000 aufweist, wobei höchstens 10% der Peptide ein endständiges Glutamin haben, wobei das Verfahren das Behandeln von glutaminreichen Weizenproteinen mit einem proteolytischen Enzym, das ausschließlich eine Endopeptidase ist.

2. Verfahren nach Anspruch 1, bei dem die Peptidzusammensetzung durch Filtern, Mikrofiltration oder Ultrafiltration gereinigt wird, um eine klare Zusammensetzung zu bilden.

3. Verfahren nach Anspruch 1 oder 2, bei dem die Peptidzusammensetzung einer Pasteurisierung unterzogen wird.

4. Nahrungsmittelzusammensetzung, erhältlich nach einem der vorhergehenden Ansprüche, bei der die Peptidzusammensetzung wenigstens 20% Glutamin mit einem Molekulargewicht zwischen 200 und 10000aufweist, wobei höchstens 10% der Peptide ein endständiges Glutamin haben.

5. Nahrungsmittelzusammensetzung nach Anspruch 4, bei der in der Peptidzusammensetzung höchstens 2% der Peptide ein endständiges Glutamin aufweisen.

6. Nahrungsmittelzusammensetzung nach Anspruch 5, bei der die Peptidzusammensetzung mindestens 25% Glutamin aufweist.

7. , Nahrungsmittelzusammensetzung nach Anspruch 5 oder 6, bei der die Peptidzusammensetzung höchstens 5% freie Aminosäuren aufweist.

8. Nahrungsmittelzusammensetzung nach den Ansprüchen 5 bis 7, bei der die Peptidzusammensetzung höchstens 2% freies Glutamin aufweist.

9. Nahrungsmittelzusammensetzung nach Anspruch 8, bei der die Peptidzusammensetzung höchstens 1% freies Glutamin aufweist.

10. Nahrungsmittelzusammensetzung nach den Ansprüchen 4-9, ferner mit Geschmacks-, Farb- und/oder Aromastoffen.

11. Nahrungsmittelzusammensetzung nach Anspruch 10, ferner mit herkömmlichen Nahrungszusätzen.

## Revendications

1. Procédé pour la fabrication d'une préparation alimentaire comprenant une préparation peptidique riche en glutamine provenant de protéine de blé, un solvant classique et éventuellement d'autres produits nutritifs, ladite préparation peptidique comprenant au moins 20 % de glutamine, ayant une masse moléculaire entre 200 et 10 000, et au plus 10 % des peptides ayant une terminaison glutamine, ledit procédé comprenant le traitement de la protéine de blé riche en glutamine par une enzyme protéolytique, cette enzyme étant exclusivement une endopeptidase.

2. Procédé selon la revendication 1, dans lequel la préparation peptidique est purifiée au moyen d'une filtration, d'une microfiltration ou d'une ultrafiltration pour former une préparation limpide.

3. Procédé selon la revendication 1 ou 2, dans lequel la préparation peptidique est soumise à une pasteurisation.

4. Préparation alimentaire pouvant être obtenue selon l'une quelconque des revendications précédentes, dans laquelle la préparation peptidique comprend au moins 20 % de glutamine et a une masse moléculaire entre environ 200 et environ 10 000, au plus 10 % des peptides ayant une terminaison glutamine.

5. Préparation alimentaire selon la revendication 4, dans laquelle, dans la préparation peptidique, au plus 2 % des peptides ont une terminaison glutamine.

6. Préparation alimentaire selon la revendication 5, dans laquelle la préparation peptidique contient au moins 25 % de glutamine.

7. Préparation alimentaire selon la revendication 5 ou 6, dans laquelle la préparation peptidique ne contient pas plus de 5 % d'acides aminés libres.

8. Préparation alimentaire selon les revendications 5 à 7, dans laquelle la préparation peptidique ne contient pas plus de 2 % de glutamine libre.

9. Préparation alimentaire selon la revendication 8, dans laquelle la préparation peptidique ne contient pas plus de 1 % de glutamine libre.

10. Préparation alimentaire selon les revendications 4 à 9, contenant en outre des substances aromatisantes, colorantes et/ou aromatiques.

11. Préparation alimentaire selon la revendication 10, contenant en outre des additifs alimentaires classiques.
